# EUROPEAN PATENT APPLICATION

(11) **EP 4 635 703 A1**
(43) Date of publication of application: **22.10.2025**
(21) Application number: 23902990.3
(22) Date of filing: 31.03.2023
(51) Int. Cl.: B29B 13/06, F26B 5/16, F26B 21/02, B01D 53/26, B29C 31/02

(54) **DEHUMIDIFICATION DRYING SYSTEM FOR SYNTHETIC RESIN MOLDING MATERIAL**

(30) Priority: 15.12.2022 JP 2022200186
(71) Applicant: Osaka Reiken Co., Ltd., Higashiosaka-shi, Osaka 578-0982 (JP)
(72) Inventor: KANAOKA, Yoshiki, Higashiosaka-shi, Osaka 578-0982 (JP); NAGATSUNA, Yasuyuki, Higashiosaka-shi, Osaka 578-0982 (JP)
(74) Representative: Marks & Clerk LLP
(86) International application number: PCT/JP2023/013696
(87) International publication number: WO 2024/127683

(57) **Abstract**

An object of the present disclosure is to provide a dehumidification drying system for a synthetic resin molding material, the system being capable of suppressing energy loss and improving energy efficiency. The dehumidification drying system 1 comprises a drying hopper 2 for storing a synthetic resin molding material in its inside; dehumidifiers 8 for producing dry air to be supplied to the drying hopper 2; a cooler 13 for cooling humidified air that is supplied from the drying hopper 2 to the dehumidifiers 8 after being used to dry the synthetic resin molding material in the drying hopper 2; and a heater 13. The cooler 13 is configured to cool humidified air by heat exchange with outside air. The outside air having an elevated temperature as a result of heat exchange with the humidified air in the cooler 13 is heated by the heater 13 and supplied as regenerating gas for the adsorbent to the dehumidifiers 8.

## Description

### Technical Field

The present disclosure relates to a dehumidification drying system for removing moisture from a synthetic resin molding material, such as resin pellets.

### Background Art

Synthetic resin molding materials are typically processed into pellets and, in that state, are supplied to a resin molding machine, such as an injection molding machine. Resin pellets absorb moisture from the atmosphere. With a high moisture content, hydrolysis will occur during the melt-kneading process, which causes a decrease in the strength and impact resistance of molded articles, significantly deteriorating the quality of the molded articles. Additionally, defects in the appearance of the molded articles are also caused. Therefore, moisture is removed from the resin pellets before the resin pellets are supplied to an injection molding machine or the like.

Conventionally, the moisture contained in resin pellets is removed, for example, by a method comprising supplying high-temperature dry air to a drying hopper in which resin pellets are stored inside, and bringing the high-temperature dry air into contact with the resin pellets in the drying hopper. The resin pellets are heated and dried by the dry air, whereby the moisture adhered on the surface and contained inside the resin pellets is removed from the resin pellets (see, for example, PTL 1).

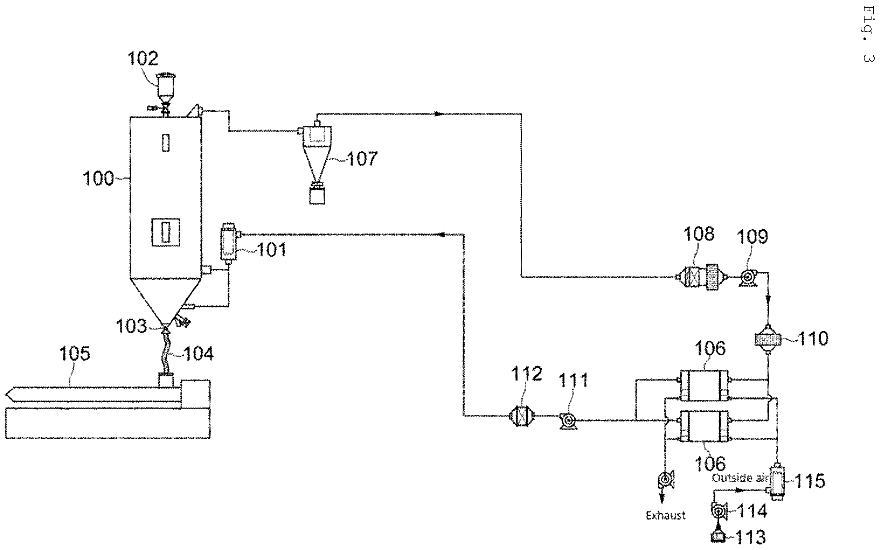

Fig. 3 shows a schematic configuration of a conventional example of a dehumidification drying system for supplying high-temperature dry air to a drying hopper 100. Dry air is heated to, for example, 150°C to 180°C by a heater 101 and then introduced into the drying hopper 100. Resin pellets are fed into the drying hopper 100 from a hopper loader 102. The resin pellets in the drying hopper 100 are heated by the high-temperature dry air. The resin pellets thus dried are supplied to a resin molding machine 105 through a transport pipe 104 by opening a solenoid valve 103.

The dry air used to dry the resin pellets is humidified by absorbing moisture from the resin pellets and is discharged as humidified air from the drying hopper 100. After foreign matter contained in the humidified air discharged from the drying hopper 100 is removed in a dust collector 107, the humidified air is cooled by a cooler 108, compressed by a blower 109, cooled again by a cooler 110, and then supplied to dehumidifiers 106. The humidified air is subjected to dehumidification in the dehumidifiers 106 to be used again as dry air for drying the resin pellets in the drying hopper 100.

Typically, the coolers 108 and 110 used here are water-cooled heat exchangers and cool the humidified air by heat exchange with cooling water to lower the temperature of the humidified air. The temperature of the humidified air discharged from the drying hopper 100 is, for example, 60°C to 80°C, and the temperature of the humidified air is lowered to, for example, 40°C by the cooler 108. The temperature of the humidified air is increased when it passes through the blower 109, and is lowered to, for example, 40°C by the cooler 110. When the humidified air has a low temperature, the moisture contained in the humidified air is efficiently adsorbed by the adsorbent in the dehumidifiers 106.

The dehumidifiers 106 contain an adsorbent and are configured to remove moisture from the humidified air by allowing the adsorbent to adsorb the moisture contained in the humidified air. In this manner, the humidified air is dehumidified to produce dry air. The produced dry air is compressed by a blower 111, foreign matter is removed from the dry air by a filter device 112, and the dry air is heated by the heater 101 and then supplied again to the drying hopper 100.

In the dehumidifiers 106, outside air is typically used as regenerating gas for regenerating the adsorbent. The outside air from which foreign matter is removed by a filter device 113 is compressed by a blower 114, heated to, for example, 200°C to 230°C by a heater 115, and then supplied to the dehumidifiers 106. After being used to regenerate the adsorbent in the dehumidifiers 106, the regenerating gas is discharged from the dehumidifiers 106 and released as exhaust to the outside of the system.

### Citation List

### Patent Literature

PTL 1: JP7-19770Y

### Summary of Invention

### Technical Problem

In the dehumidification drying system shown in Fig. 3 described above, the coolers 108 and 110 for cooling humidified air before the humidified air is supplied to the dehumidifiers 106 are water-cooled coolers. Although the water-cooled coolers 108 and 110 can efficiently cool the humidified air with cooling water, the cooling water that has collected the thermal energy of the humidified air while cooling the humidified air is cooled in a cooling tower. Therefore, in conventional dehumidification drying systems, the collected thermal energy cannot be effectively used.

Further, in the dehumidification drying system shown in Fig. 3 described above, outside air is used as regenerating gas for the adsorbent in the dehumidifiers 106; however, the outside air can be as low as 10°C or lower in winter. Therefore, a great amount of thermal energy is required to heat outside air to, for example, 200°C to 230°C by the heater 115 to produce regenerating gas.

The present disclosure has been accomplished in view of the above circumstances. An object of the present disclosure is to provide a dehumidification drying system for a synthetic resin molding material, the system being capable of suppressing energy loss and improving energy efficiency.

### Solution to Problem

In order to solve the above problem, the dehumidification drying system of the present disclosure encompasses the subject matter of the dehumidification drying system described in Item 1 below.

### Item 1.

A dehumidification drying system comprising:
a drying hopper for storing a synthetic resin molding material inside;
a dehumidifier for producing dry air to be supplied to the drying hopper to dry the synthetic resin molding material;
a dry-air flow path for transporting the dry air from the dehumidifier to the drying hopper;
a humidified-air flow path for transporting humidified air discharged from the drying hopper after being used to dry the synthetic resin molding material to the dehumidifier; and
a cooler for cooling the humidified air, the cooler being provided in the humidified-air flow path;
wherein
the dehumidifier contains an adsorbent and is configured to produce the dry air by allowing the adsorbent to remove moisture contained in the humidified air by adsorption, and to regenerate the adsorbent by allowing regenerating gas to remove the moisture adsorbed by the adsorbent by desorption,
wherein
the cooler is configured to cool the humidified air by heat exchange with outside air,
wherein
the dehumidification drying system further comprises:
   a regenerating-gas flow path for transporting, as the regenerating gas, the outside air having an elevated temperature as a result of heat exchange with the humidified air discharged from the cooler to the dehumidifier; and
   a first heater for heating the outside air discharged from the cooler, the first heater being provided in the regenerating-gas flow path.

As a preferred embodiment of the dehumidification drying system described in Item 1 above, the dehumidification drying system of the present disclosure encompasses the dehumidification drying system described in Item 2 below.

### Item 2.

The dehumidification drying system according to Item 1, further comprising:
a used-regenerating-gas flow path for transporting used regenerating gas discharged from the dehumidifier after being used to regenerate the adsorbent in the dehumidifier to the outside of the system; and
a preheater provided upstream of the first heater in the regenerating-gas flow path;
wherein
the preheater is configured to preheat the outside air discharged from the cooler by heat exchange with the used regenerating gas.

As a preferred embodiment of the dehumidification drying systems described in Items 1 and 2, the dehumidification drying system of the present disclosure encompasses the dehumidification drying system described in Item 3 below.

### Item 3.

The dehumidification drying system according to Item 1 or 2, further comprising a circulation flow path for mixing a portion of the used regenerating gas from the used-regenerating-gas flow path into the upstream of the first heater in the regenerating-gas flow path.

As a preferred embodiment of the dehumidification drying systems described in Items 1 to 3, the dehumidification drying system of the present disclosure encompasses the dehumidification drying system described in Item 4 below.

### Item 4.

The dehumidification drying system according to any one of Items 1 to 3, further comprising:
a temperature sensor for measuring the temperature of the humidified air cooled by the cooler, the temperature sensor being provided in the humidified-air flow path; and
a control unit for controlling the airflow volume of a blower that supplies compressed outside air to the cooler, based on the temperature measured by the temperature sensor.

As a preferred embodiment of the dehumidification drying systems described in Items 1 to 4, the dehumidification drying system of the present disclosure encompasses the dehumidification drying system described in Item 5 below.

### Item 5.

The dehumidification drying system according to any one of Items 1 to 4, further comprising a filter device for purifying outside air supplied to the cooler.

As a preferred embodiment of the dehumidification drying systems described in Items 1 to 5, the dehumidification drying system of the present disclosure encompasses the dehumidification drying system described in Item 6 below.

### Item 6.

The dehumidification drying system according to any one of Items 1 to 5, further comprising:
a second heater for heating the dry air, the second heater being provided in the dry-air flow path; and
a heat exchanger provided upstream of the second heater in the dry-air flow path;
wherein
the heat exchanger is configured to heat the dry air supplied to the second heater by heat exchange with the humidified air discharged from the drying hopper.

### Advantageous Effects of Invention

The dehumidification drying system of the present disclosure is capable of suppressing energy loss and improving energy efficiency.

### Brief Description of Drawings

Fig. 1 is a schematic diagram of a dehumidification drying system according to one embodiment of the present disclosure.
Fig. 2 is a schematic diagram of a dehumidification drying system according to another embodiment of the present disclosure.
Fig. 3 is a schematic diagram of a conventional dehumidification drying system.

### Description of Embodiments

The present disclosure relates to a dehumidification drying system for removing moisture from a synthetic resin molding material that is used as a raw material in the production of a plastic molded article by injection molding, extrusion molding, or the like. Synthetic resin molding materials are hygroscopic and absorb moisture from the atmosphere. If a synthetic resin molding material with a high moisture content is supplied to a resin molding machine, hydrolysis will occur during the melt-kneading process, which causes a decrease in the strength and impact resistance of molded articles, significantly deteriorating the quality of the molded articles. Additionally, defects in the appearance of the molded articles are also caused. Therefore, removal of moisture from the synthetic resin molding material is necessary before the synthetic resin molding material is supplied to a resin molding machine. The dehumidification drying system of the present disclosure provides a technique for drying a synthetic resin molding material to remove moisture from the synthetic resin molding material.

The synthetic resin molding material may have any shape and may be in the form of, for example, powder, granules, or pellets. In the embodiments described below, the synthetic resin molding material is in the form of resin pellets; however, the synthetic resin molding material is not limited to resin pellets. The synthetic resin molding material is made from thermoplastic resin. Examples of thermoplastic resins include, but are not limited to, polyester, polyethylene, polypropylene, polystyrene, ABS, and polyamide.

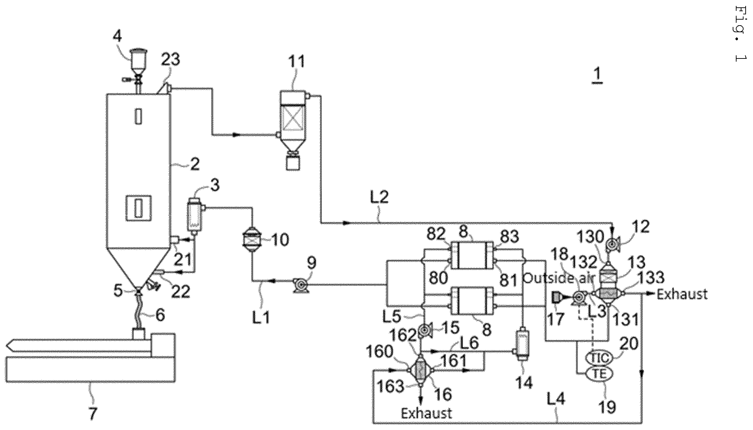

Below, one embodiment of the dehumidification drying system of the present disclosure will be described in detail with reference to the drawings. Fig. 1 shows a schematic configuration of a dehumidification drying system 1 according to this embodiment.

The dehumidification drying system 1 comprises a drying hopper 2 for storing resin pellets inside. A hopper loader 4 is located above the drying hopper 2. The resin pellets are transported to the hopper loader 4 from a raw material tank (not shown), and the resin pellets are fed from the hopper loader 4 into the drying hopper 2. The resin pellets are dried while being stored in the drying hopper 2. The resin pellets after being dried are supplied to a resin molding machine 7 from the drying hopper 2 through a transport pipe 6 by opening and activating a solenoid valve 5. The dry air used to dry the resin pellets in the drying hopper 2 is humidified by adsorbing moisture from the resin pellets, and moves upward inside the drying hopper 2 as humidified air.

The drying hopper 2 may have any shape and structure, and can be a drying hopper having a conventionally known shape and structure.

The dehumidification drying system 1 comprises a dry-air flow path L1 for transporting dry air for drying the resin pellets to the drying hopper 2. The dry-air flow path L1 transports dry air from dehumidifiers 8 to the drying hopper 2.

In this embodiment, one end of the dry-air flow path L1 branches into two. One branch at this end of the dry-air flow path L1 is connected to a first introduction port 21 for dry air provided at the lower part of the drying hopper 2. The other branch at this end of the dry-air flow path L1 is connected to a second introduction port 22 for dry air provided below the first introduction port 21 at the lower part of the drying hopper 2. The tip of the second introduction port 22 extends to the bottom of the drying hopper 2. Dry air is introduced from the dry-air flow path L1 through the first introduction port 21 into the lower part of the drying hopper 2, and is also introduced from the dry-air flow path L1 through the second introduction port 22 into the bottom of the drying hopper 2.

In this embodiment, the other end of the dry-air flow path L1 branches into two. One branch at the other end of the dry-air flow path L1 is connected to a discharge port 80 for dry air provided in one of the dehumidifiers 8. The other branch at the other end of the dry-air flow path L1 is connected to a discharge port 80 for dry air provided in the other one of the dehumidifiers 8. The dehumidifiers 8, which will be described below, are a device for dehumidifying humidified air to produce dry air. The dry air is supplied from the dehumidifiers 8 through the discharge ports 80 to the dry-air flow path L1.

In the dry-air flow path L1, a heater 3 (a second heater), a filter device 10, and a blower 9 are arranged in sequence, with the heater 3 being closest to the drying hopper 2, between the drying hopper 2 and the dehumidifiers 8. Dry air discharged from the dehumidifiers 8 is supplied to the drying hopper 2 via the blower 9, the filter device 10, and the heater 3, in this order.

The blower 9 draws in dry air from an intake port, compresses the dry air, and then discharges the compressed dry air from an outlet port. The filter device 10 removes foreign matter from the dry air flowing through the dry-air flow path L1. The heater 3 heats the dry air that is supplied to the drying hopper 2 to increase the temperature of the dry air. The heater 3 heats the dry air so that the temperature of the dry air becomes, for example, 150°C to 180°C. The heater 3, the filter device 10, and the blower 9 can be any conventionally known heater, filter device, and blower.

The dehumidification drying system 1 comprises a humidified-air flow path L2 for transporting humidified air after being used to dry resin pellets in the drying hopper 2 to the dehumidifiers 8. The humidified-air flow path L2 transports humidified air from the drying hopper 2 to the dehumidifiers 8.

One end of the humidified-air flow path L2 is connected to a discharge port 23 for humidified air provided at the upper portion of the drying hopper 2. In this embodiment, the other end of the humidified-air flow path L2 branches into two. One branch at the other end of the humidified-air flow path L2 is connected to an introduction port 81 for humidified air provided in one of the dehumidifiers 8. The other branch at the other end of the humidified-air flow path L2 is connected to an introduction port 81 for humidified air provided in the other one of the dehumidifiers 8. Humidified air is introduced into the dehumidifiers 8 through the introduction ports 81 from the humidified-air flow path L2.

In the humidified-air flow path L2, a dust collector 11, a blower 12, and a cooler 13 are arranged in sequence, with the dust collector 11 being closest to the drying hopper 2, between the drying hopper 2 and the dehumidifiers 8. The humidified air discharged from the drying hopper 2 is supplied to the dehumidifiers 8 via the dust collector 11, the blower 12, and the cooler 13, in this order.

The dust collector 11 removes foreign matter from the humidified air flowing through the humidified-air flow path L2. The dust collector 11 may be, for example, a cyclone dust collector. However, the dust collector 11 is not limited to being a cyclone dust collector and can be any conventionally known dust collector.

The blower 12 draws in humidified air through an intake port, compresses the humidified air, and then discharges the compressed humidified air from an outlet port. The blower 12 can be any conventionally known blower.

The cooler 13 cools humidified air that is supplied to the dehumidifiers 8 to lower the temperature of the humidified air. The cooler 13 cools humidified air so that the temperature of the humidified air becomes, for example, about 40°C. The temperature of the humidified air discharged from the drying hopper 2 is, for example, about 60°C to 80°C. If humidified air still having a high temperature is supplied to the dehumidifiers 8, the efficiency of dehumidifying humidified air in the dehumidifiers 8 decreases. Therefore, humidified air cooled by the cooler 13 is supplied to the dehumidifiers 8, whereby the efficiency of dehumidifying humidified air in the dehumidifiers 8 can improve. In this manner, dry air with a low dew point can be produced in the dehumidifiers 8.

The cooler 13 is an air-cooled heat exchanger. Into the cooler 13, humidified air is introduced through an introduction port 130 for humidified air, while outside air is introduced through an introduction port 132 for outside air. The cooler 13 cools the humidified air by heat exchange with the outside air. The cooled humidified air is discharged from a discharge port 131 for humidified air and supplied to the dehumidifiers 8. The outside air adsorbs thermal energy from the humidified air as a result of heat exchange with the humidified air, and the temperature of the outside air increases. The outside air having an elevated temperature as a result of heat exchange with the humidified air is discharged from a discharge port 133 for outside air; a portion of the outside air is released as exhaust to the outside of the system while a portion is supplied as regenerating gas to the dehumidifiers 8.

The cooler 13 may have any shape and structure, and can be any conventionally known cooler, as long as it is an air-cooled heat exchanger.

The dehumidification drying system 1 comprises an outside-air flow path L3 for transporting outside air to the cooler 13. A filter device 17 and a blower 18 are provided upstream of the cooler 13 in the outside-air flow path L3. Outside air is supplied to the cooler 13 via the filter device 17 and the blower 18, in this order.

The blower 18 draws in outside air from an intake port, compresses the outside air, and then discharges the compressed outside air from an outlet port. The filter device 17 removes foreign matter from the outside air flowing through the outside-air flow path L3. The filter device 17 and the blower 18 can be a conventionally known filter device and blower.

In the humidified-air flow path L2, a temperature sensor 19 is provided between the cooler 13 and the dehumidifiers 8 (downstream of the cooler 13). The temperature sensor 19 measures the temperature of humidified air that is supplied to the dehumidifiers 8 after being cooled by the cooler 13. In this embodiment, the temperature of humidified air measured by the temperature sensor 19 is monitored by a control unit 20. That is, the temperature sensor 19 converts the measured temperature into electrical signals and outputs the signals to the control unit 20.

The control unit 20 constantly monitors the temperature of the humidified air supplied to the dehumidifiers 8, and controls the volume of outside air supplied from the blower 18 to the cooler 13 (the airflow volume of the blower 18) so that the temperature of the humidified air remains constant, for example, at 40°C. The control unit 20, for example, uses an inverter to control the rotational number (rotational speed) of the motor integrated within the blower 18 according to the temperature of humidified air. In this manner, outside air is supplied to the cooler 13 at a volume corresponding to the temperature of humidified air so as to adjust the temperature of the humidified air supplied to the dehumidifiers 8 to be constant. The airflow volume of the blower 18 can also be controlled by adjusting a damper.

In this embodiment, the dehumidification drying system 1 comprises a temperature-indicating controller (TIC) as the control unit 20. The temperature-indicating controller 20 compares the electrical signal output from the temperature sensor 19 with a target value, and performs calculations according to the deviation to control the blower 18. The control unit 20 may be configured with a general-purpose computer.

The dehumidification drying system 1 comprises dehumidifiers 8. The dehumidifiers 8 are a device that dehumidifies humidified air to produce dry air to be supplied to the drying hopper 2 for drying resin pellets.

The dehumidifiers 8 contain an adsorbent. Humidified air is introduced into the dehumidifiers 8 through the introduction ports 81 from the humidified-air flow path L2. In the dehumidifiers 8, the humidified air is brought into contact with the adsorbent, and the moisture contained in the humidified air is adsorbed by the adsorbent, whereby the moisture is removed from the humidified air. In this manner, the humidified air is dehumidified in the dehumidifiers 8 to produce dry air. The dry air is discharged from the dehumidifiers 8 through the discharge ports 80 and is supplied to the drying hopper 2 through the dry-air flow path L1. The adsorbent may be any adsorbent that can adsorb moisture from gas. Examples include silica gel, zeolite, and activated carbon.

Into the dehumidifiers 8, regenerating gas is introduced from a regenerating-gas flow path L4 through introduction ports 83. The regenerating gas is brought into contact with the adsorbent in the dehumidifiers 8 and desorbs the moisture adsorbed by the adsorbent, whereby the moisture is removed from the adsorbent. In this manner, the adsorbent is regenerated in the dehumidifiers 8. The regenerating gas is not particularly limited and may be air having a high temperature of, for example, about 200°C to 230°C. The regenerating gas after being used to regenerate the adsorbent in the dehumidifiers 8 (referred to as "used regenerating gas" in the present disclosure) is discharged from the dehumidifiers 8 through discharge ports 82 and released as exhaust to the outside of the system through a used-regenerating-gas flow path L5.

The dehumidifiers 8 may have any shape and structure as long as they are configured to produce dry air by allowing the adsorbent to remove moisture contained in the humidified air by adsorption, and to regenerate the adsorbent by allowing regenerating gas to remove the moisture adsorbed by the adsorbent by desorption.

For example, the dehumidifiers 8 are rotary continuous dehumidifiers. The dehumidifiers 8 of this type comprise a cylindrical adsorption rotor rotatable about a rotation axis. The adsorption rotor includes, for example, an adsorption element having a honeycomb structure. The adsorption element carries an adsorbent. The adsorption rotor is divided into an adsorption zone and a desorption zone along the circumferential direction around the rotation axis, and the adsorption element moves alternately between the adsorption zone and the desorption zone as the adsorption rotor rotates.

Humidified air is supplied to the adsorption zone of the adsorption rotor. When the humidified air passes through the adsorption element located in the adsorption zone, the moisture contained in the humidified air is adsorbed by the adsorbent, whereby the humidified air is dehumidified. Regenerating gas is supplied to the desorption zone of the adsorption rotor. When the regenerating gas passes through the adsorption element located in the desorption zone, the moisture is desorbed from the adsorbent, whereby the adsorbent is regenerated.

The dehumidifiers 8 are not limited to rotary continuous dehumidifiers and can be other conventionally known dehumidifiers.

The dehumidification drying system 1 comprises a regenerating-gas flow path L4 for transporting regenerating gas for regenerating the adsorbent in the dehumidifiers 8 to the dehumidifiers 8. The regenerating gas for use is the outside air having an elevated temperature as a result of heat exchange with humidified air in the cooler 13. The regenerating-gas flow path L4 transports, from the outside-air flow path L3 to the dehumidifiers 8, the outside air discharged from the cooler 13.

One end of the regenerating-gas flow path L4 is connected to the outside-air flow path L3 at the downstream side of the cooler 13. In this embodiment, the other end of the regenerating-gas flow path L4 branches into two. One branch at the other end of the regenerating-gas flow path L4 is connected to an introduction port 83 for regenerating gas provided in one of the dehumidifiers 8. The other branch at the other end of the regenerating-gas flow path L4 is connected to an introduction port 83 for regenerating gas provided in the other one of the dehumidifiers 8. The outside air discharged from the cooler 13 is introduced as regenerating gas into the dehumidifiers 8 from the regenerating-gas flow path L4 through the introduction ports 83.

In the regenerating-gas flow path L4, a preheater 16 and a heater 14 (first heater) are arranged in sequence, with the preheater 16 being closest to the cooler 13, between the cooler 13 and the dehumidifiers 8. The outside air discharged from the cooler 13 is supplied to the dehumidifiers 8 via the preheater 16 and the heater 14, in this order.

The heater 14 heats the outside air discharged from the cooler 13 (the outside air supplied as regenerating gas to the dehumidifiers 8) to increase the temperature of the outside air. The heater 14 heats the outside air so that the temperature of the outside air becomes, for example, 200°C to 230°C. The heater 14 can be any conventionally known heater.

The preheater 16 preheats the outside air discharged from the cooler 13 (the outside air supplied as regenerating gas to the dehumidifiers 8) to increase the temperature of the outside air. The temperature of the outside air discharged from the cooler 13 is, for example, about 51°C to 56°C. By preheating the outside air with the preheater 16, the amount of thermal energy applied to the outside air by the heater 14 can be reduced.

The preheater 16 is an air-cooled heat exchanger. Into the preheater 16, the outside air discharged from the cooler 13 (the outside air supplied as regenerating gas to the dehumidifiers 8) is introduced through an introduction port 160 for regenerating gas, while the used regenerating gas discharged from the dehumidifiers 8 is introduced through an introduction port 162 for used regenerating gas. The used regenerating gas is regenerating gas after being used to regenerate the adsorbent in the dehumidifiers 8 and has a high temperature (for example, about 160°C). Therefore, the preheater 16 preheats the outside air discharged from the cooler 13 by heat exchange with the high-temperature used regenerating gas. The heated outside air has an elevated temperature of, for example, 140°C to 150°C, and is discharged from a discharge port 161 for regenerating gas and then supplied to the heater 14.

The used regenerating gas is cooled to, for example, about 55°C to 67°C by heat exchange with the outside air discharged from the cooler 13, and is discharged from a discharge port 163 for used regenerating gas and is released as exhaust to the outside of the system.

The preheater 16 may have any shape and structure, and can be any conventionally known preheater, as long as it is an air-cooled heat exchanger.

The dehumidification drying system 1 comprises a used-regenerating-gas flow path L5 for transporting the used regenerating gas discharged from the dehumidifiers 8 to the outside of the system.

One end of the used-regenerating-gas flow path L5 is connected to the preheater 16. In this embodiment, the other end of the used-regenerating-gas flow path L5 branches into two. One branch at the other end of the used-regenerating-gas flow path L5 is connected to the discharge port 82 for used regenerating gas provided in one of the dehumidifiers 8. The other branch at the other end of the used-regenerating-gas flow path L5 is connected to the discharge port 82 for used regenerating gas provided in the other one of the dehumidifiers 8. The used regenerating gas is supplied to the used-regenerating-gas flow path L5 from the dehumidifiers 8 through the discharge ports 82.

In the used-regenerating-gas flow path L5, a blower 15 and the preheater 16 are arranged in sequence, with the blower 15 being closest to the dehumidifiers 8. The used regenerating gas discharged from the dehumidifiers 8 is released as exhaust to the outside of the system via the blower 15 and the preheater 16, in this order.

The blower 15 draws in the used regenerating gas from an intake port, compresses the used regenerating gas, and then discharges the compressed used regenerating gas from an outlet port. The used regenerating gas discharged from the blower 15 is supplied to the preheater 16 and is used to preheat the outside air discharged from the cooler 13, as described above. The blower 15 can be any conventionally known blower.

The used-regenerating-gas flow path L5 branches into a circulation flow path L6 at a position between the blower 15 and the heat exchanger 16. The circulation flow path L6 is connected to the regenerating-gas flow path L4. The circulation flow path L6 is connected to the regenerating-gas flow path L4 at a position between the heat exchanger 16 and the heater 14.

In the circulation flow path L6, a portion of the used regenerating gas discharged from the dehumidifiers 8 is mixed with the outside air discharged from the cooler 13 (the outside air supplied as regenerating gas to the dehumidifiers 8). The used regenerating gas has a high temperature (for example, about 160°C); thus, when the used regenerating gas is mixed with the outside air discharged from the cooler 13, the temperature of the outside air increases. Therefore, it is possible to reduce the amount of thermal energy added to the outside air by the heater 14.

In the dehumidification drying system 1 according to the embodiment described above, dry air heated to a high temperature heats the synthetic resin molding material (resin pellets) in the drying hopper 2, whereby the moisture is removed from the synthetic resin molding material (resin pellets) for drying. Therefore, the dehumidification drying system 1 according to this embodiment makes it possible to supply a synthetic resin molding material (resin pellets) from which moisture has been removed to the resin molding machine 7.

Further, in the dehumidification drying system 1 according to this embodiment, the humidified air that has absorbed moisture from the synthetic resin molding material (resin pellets) while drying the synthetic resin molding material (resin pellets) is discharged from the drying hopper 2. The discharged humidified air is, for example, cooled by heat exchange with outside air in the cooler 13 and then introduced into the dehumidifiers 8. The outside air that has absorbed thermal energy from the humidified air while cooling the humidified air is discharged from the cooler 13 and is supplied to the preheater 16.

In the dehumidifiers 8, the moisture contained in humidified air is adsorbed by the adsorbent, whereby moisture is removed from the humidified air, resulting in dehumidification. This produces dry air. Additionally, the moisture adsorbed by the adsorbent is desorbed by regenerating gas, whereby the moisture is removed from the adsorbent, resulting in regeneration of the adsorbent. The dry air produced in the dehumidifiers 8 is, for example, heated by the heater 3, and then introduced into the drying hopper 2 to be used again to dry the synthetic resin molding material. The used regenerating gas that has absorbed moisture from the adsorbent while regenerating the adsorbent is discharged from the dehumidifiers 8 and is supplied to the preheater 16.

In the preheater 16, the outside air after being used to cool humidified air in the cooler 13 is discharged from the cooler 13, is preheated by heat exchange with the used regenerating gas discharged from the dehumidifiers 8, and is then heated in the heater 14. The resulting outside air having a reduced temperature is introduced into the dehumidifiers 8 as regenerating gas and is used to desorb moisture from the adsorbent.

As described above, in the dehumidification drying system 1 according to this embodiment, the outside air that has been used to cool humidified air in the cooler 13 is supplied to the dehumidifiers 8 as regenerating gas. Therefore, the thermal energy collected from the humidified air while cooling the humidified air is not wasted and can be effectively used to regenerate the adsorbent.

Furthermore, in the dehumidifiers 8, outside air is used as regenerating gas for the adsorbent. This outside air has an elevated temperature as a result of heat exchange with humidified air in the cooler 13; the temperature of the outside air is, for example, about 51°C to 56°C, and exceeds, for example, 50°C even in winter. Therefore, when the outside air is heated to a temperature exceeding 200°C by the heater 14, the amount of thermal energy added to the outside air for producing regenerating gas in the heater 14 can be reduced. Accordingly, a large amount of thermal energy is not required to produce regenerating gas, which contributes to energy savings.

As described above, the dehumidification drying system 1 according to this embodiment can suppress energy loss and improve energy efficiency.

Further, in the dehumidification drying system 1 according to this embodiment, the cooler 13 for cooling humidified air before the humidified air is supplied to the dehumidifiers 8 is an air-cooled cooler. Therefore, in the dehumidification drying system 1 according to this embodiment, the cooler 13 is more easily maintained, compared to the case in which the cooler 13 is a water-cooled cooler, making it possible to reduce maintenance costs and labor.

Furthermore, in the dehumidification drying system 1 according to this embodiment, the outside air for use as regenerating gas for the adsorbent in the dehumidifiers 8 is introduced into the dehumidifiers 8 via the cooler 13 with foreign matter having been removed by the filter device 17. Accordingly, the dehumidification drying system 1 according to this embodiment can prevent foreign matter contained in the outside air from entering the dehumidifiers 8 or the system paths through the dehumidifiers 8.

Furthermore, in the dehumidification drying system 1 according to this embodiment, the outside air for use as regenerating gas for the adsorbent in the dehumidifiers 8 is supplied to the heater 14 after being heated by heat exchange with the used regenerating gas in the preheater 16. Accordingly, in the dehumidification drying system 1 according to this embodiment, the used regenerating gas having a high temperature after being used to regenerate the adsorbent in the dehumidifiers 8 is supplied to the preheater 16 for preheating the outside air for use as regenerating gas. Therefore, the thermal energy of the used regenerating gas is not wasted and can be effectively used for producing regenerating gas. Moreover, since the outside air is preheated, the amount of thermal energy added to the outside air for producing regenerating gas in the heater 14 can be reduced. Accordingly, the dehumidification drying system 1 according to this embodiment can effectively suppress energy loss and improve energy efficiency.

Furthermore, in the dehumidification drying system 1 according to this embodiment, the outside air for use as regenerating gas for the adsorbent in the dehumidifiers 8 is mixed with a portion of high-temperature used regenerating gas that has been used to regenerate the adsorbent in the dehumidifiers 8. The outside air, thereby having an elevated temperature, is supplied to the heater 14. For this reason, the amount of thermal energy added to the outside air to produce regenerating gas in the heater 14 can be reduced, and the thermal energy of the used regenerating gas discharged from the dehumidifiers 8 is not wasted and can be effectively used for producing regenerating gas. Accordingly, the dehumidification drying system 1 according to this embodiment can effectively suppress energy loss and improve energy efficiency.

Furthermore, in the dehumidification drying system 1 according to this embodiment, the temperature of the humidified air supplied to the dehumidifiers 8 is measured by the temperature sensor 19. Based on the temperature of the humidified air measured by the temperature sensor 19, the amount of the outside air (the airflow volume of the blower 18) supplied to the cooler 13 to cool the humidified air is controlled so that the temperature of the humidified air supplied to the dehumidifiers 8 is a constant temperature. Accordingly, since humidified air at a constant low temperature is supplied to the dehumidifiers 8, dry air with a low dew point can be efficiently produced in the dehumidifiers 8.

Although an embodiment of the dehumidification drying system of the present disclosure is described above, the dehumidification drying system of the present disclosure is not limited to this embodiment, and various modifications are possible without departing from the spirit of the present disclosure. For example, the following modifications are possible. Furthermore, the outlines of the following modified examples can be appropriately combined.

For example, in the embodiment described above, the dehumidification drying system 1 comprises two dehumidifiers 8. In one modified example, the dehumidification drying system 1 may comprise a single dehumidifier 8 or three or more dehumidifiers 8.

In the embodiment described above, the dehumidification drying system 1 comprises the filter device 17, and foreign matter is removed from the outside air by the filter device 17 before the outside air is supplied to the cooler 13. In one modified example, the dehumidification drying system 1 does not necessarily comprise the filter device 17.

In the embodiment described above, the dehumidification drying system 1 comprises the circulation flow path L6, and a portion of the used regenerating gas discharged from the dehumidifiers 8 is mixed with the outside air discharged from the cooler 13 (the outside air supplied as regenerating gas to the dehumidifiers 8). In one modified example, the dehumidification drying system 1 may not comprise the circulation flow path L6, and the used regenerating gas discharged from the dehumidifiers 8 may be entirely supplied to the preheater 16 and then released as exhaust to the outside of the system.

In the embodiment described above, the dehumidification drying system 1 comprises the preheater 16, and the outside air discharged from the cooler 13 (the outside air supplied as regenerating gas to the dehumidifiers 8) is preheated by heat exchange with the used regenerating gas discharged from the dehumidifiers 8, and then supplied to the heater 14. In one modified example, the dehumidification drying system 1 may not comprise the preheater 16, and the outside air discharged from the cooler 13 (the outside air supplied as regenerating gas to the dehumidifiers 8) may be supplied to the heater 14 without being preheated. In this modified example, a portion of the used regenerating gas discharged from the dehumidifiers 8 may be mixed with the outside air discharged from the cooler 13 (the outside air supplied as regenerating gas to the dehumidifiers 8) through the circulation flow path L6, or all may be released as exhaust to the outside of the system.

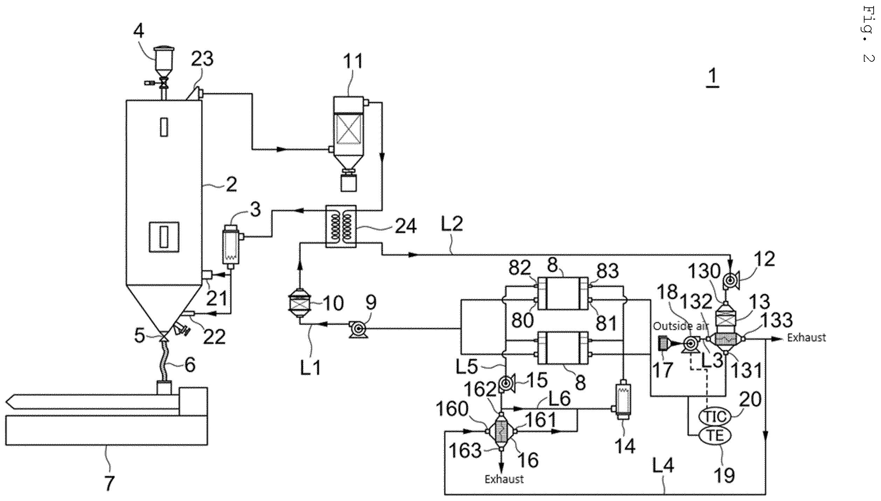

Further, as in the embodiment shown in Fig. 2, the dehumidification drying system 1 may also comprise a heat exchanger 24 for exchanging heat between the dry air discharged from the dehumidifiers 8 and supplied to the drying hopper 2 and the humidified air discharged from the drying hopper 2.

The temperature of the dry air discharged from the dehumidifiers 8 is, for example, about 55°C, and the dry air is heated in the heater 3 to a temperature of, for example, 150°C to 180°C before being supplied to the drying hopper 2. The temperature of the humidified air discharged from the drying hopper 2 is, for example, 60°C to 80°C, which is higher than the temperature of the dry air before being heated in the heater 3.

Therefore, when the dry air discharged from the dehumidifiers 8 and supplied to the drying hopper 2 is heated in the heat exchanger 24 by heat exchange with the humidified air discharged from the drying hopper 2, dry air having an elevated temperature can be supplied to the heater 3. The dry air adsorbs thermal energy through heat exchange with humidified air to be heated to a temperature of, for example, about 60°C to 70°C. Therefore, in the dehumidification drying system 1 according to the embodiment shown in Fig. 2, the amount of thermal energy added to the dry gas in the heater 3 can be reduced, and the thermal energy of the humidified air discharged from the drying hopper 2 is not wasted and can be effectively used to heat the dry air. Accordingly, the dehumidification drying system 1 according to the embodiment shown in Fig. 2 can effectively suppress energy loss and improve energy efficiency.

The humidified air introduced into the heat exchanger 24 may be humidified air before passing through the dust collector 11, and is preferably humidified air after passing through the dust collector 11. The dry air introduced into the heat exchanger 24 may be dry air before passing through the filter device 10, and is preferably dry air after passing through the filter device 10.

### Description of Reference Numerals

1. Dehumidification drying system
2. Drying hopper
3. Heater (second heater)
8. Dehumidifier
13. Cooler
14. Heater (first heater)
16. Preheater
17. Filter device
18. Blower
19. Temperature sensor
20. Control unit
24. Heat exchanger
L1. Dry-air flow path
L2. Humidified-air flow path
L4. Regenerating-gas flow path
L5. Used-regenerating-gas flow path
L6. Circulation flow path

## Claims

1. A dehumidification drying system comprising:
a drying hopper for storing a synthetic resin molding material inside;
a dehumidifier for producing dry air to be supplied to the drying hopper to dry the synthetic resin molding material;
a dry-air flow path for transporting the dry air from the dehumidifier to the drying hopper;
a humidified-air flow path for transporting humidified air discharged from the drying hopper after being used to dry the synthetic resin molding material to the dehumidifier; and
a cooler for cooling the humidified air, the cooler being provided in the humidified-air flow path;
wherein
the dehumidifier contains an adsorbent and is configured to produce the dry air by allowing the adsorbent to remove moisture contained in the humidified air by adsorption, and to regenerate the adsorbent by allowing regenerating gas to remove the moisture adsorbed by the adsorbent by desorption,
wherein
the cooler is configured to cool the humidified air by heat exchange with outside air,
wherein
the dehumidification drying system further comprises:
a regenerating-gas flow path for transporting, as the regenerating gas, the outside air having an elevated temperature as a result of heat exchange with the humidified air discharged from the cooler to the dehumidifier;
a first heater for heating the outside air discharged from the cooler, the first heater being provided in the regenerating-gas flow path;
a used-regenerating-gas flow path for transporting used regenerating gas discharged from the dehumidifier after being used to regenerate the adsorbent in the dehumidifier to the outside of the system; and
a preheater provided upstream of the first heater in the regenerating-gas flow path, and
wherein
the preheater is configured to preheat the outside air discharged from the cooler by heat exchange with the used regenerating gas.

2. A dehumidification drying system comprising:
a drying hopper for storing a synthetic resin molding material inside;
a dehumidifier for producing dry air to be supplied to the drying hopper to dry the synthetic resin molding material;
a dry-air flow path for transporting the dry air from the dehumidifier to the drying hopper;
a humidified-air flow path for transporting humidified air discharged from the drying hopper after being used to dry the synthetic resin molding material to the dehumidifier; and
a cooler for cooling the humidified air, the cooler being provided in the humidified-air flow path;
wherein
the dehumidifier contains an adsorbent and is configured to produce the dry air by allowing the adsorbent to remove moisture contained in the humidified air by adsorption, and to regenerate the adsorbent by allowing regenerating gas to remove the moisture adsorbed by the adsorbent by desorption,
wherein
the cooler is configured to cool the humidified air by heat exchange with outside air,
wherein
the dehumidification drying system further comprises:
a regenerating-gas flow path for transporting, as the regenerating gas, the outside air having an elevated temperature as a result of heat exchange with the humidified air discharged from the cooler to the dehumidifier;
a first heater for heating the outside air discharged from the cooler, the first heater being provided in the regenerating-gas flow path; and
a second heater for heating the dry air, the second heater being provided in the dry-air flow path; and
a heat exchanger provided upstream of the second heater in the dry-air flow path, and
wherein
the heat exchanger is configured to heat the dry air supplied to the second heater by heat exchange with the humidified air discharged from the drying hopper.

3. The dehumidification drying system according to claim 2, further comprising:
a used-regenerating-gas flow path for transporting used regenerating gas discharged from the dehumidifier after being used to regenerate the adsorbent in the dehumidifier to the outside of the system; and
a preheater provided upstream of the first heater in the regenerating-gas flow path;
wherein
the preheater is configured to preheat the outside air discharged from the cooler by heat exchange with the used regenerating gas.

4. The dehumidification drying system according to claim 1 or 3, further comprising a circulation flow path for mixing a portion of the used regenerating gas from the used-regenerating-gas flow path into the upstream of the first heater in the regenerating-gas flow path.

5. The dehumidification drying system according to claim 1 or 2, further comprising:
a temperature sensor for measuring the temperature of the humidified air cooled by the cooler, the temperature sensor being provided in the humidified-air flow path; and
a control unit for controlling the airflow volume of a blower that supplies compressed outside air to the cooler, based on the temperature measured by the temperature sensor.

6. The dehumidification drying system according to claim 1 or 2, further comprising a filter device for purifying outside air supplied to the cooler.
